# EUROPÄISCHE PATENTSCHRIFT

(11) **EP 4 569 369 B1**
(45) Veröffentlichungstag und Bekanntmachung des Hinweises auf die Patenterteilung: **09.12.2026**
(21) Anmeldenummer: 23748762.4
(22) Anmeldetag: 26.07.2023
(51) Int. Cl.: G02B 26/08, G02B 26/10, G03B 21/00, H04N 9/31, G02B 7/18

(54) **MEHRACHSIGES MIKROSCANNERSYSTEM UND VERFAHREN UND VORRICHTUNG ZUR STEUERUNG SEINES ANTRIEBS**
MULTI-AXIS MICROSCANNER SYSTEM, AND METHOD AND APPARATUS FOR CONTROLLING THE DRIVE THEREOF
SYSTÈME DE MICROSCANNER À AXES MULTIPLES, ET PROCÉDÉ ET APPAREIL DE COMMANDE DE SON ENTRAÎNEMENT

(30) Priorität: 08.08.2022 DE 102022119915
(43) Veröffentlichungstag der Anmeldung: 18.06.2025
(73) Patentinhaber: OQmented GmbH, 25524 Itzehoe (DE)
(72) Erfinder: TIEDE, Felix Christoph, 22179 Hamburg (DE)
(74) Vertreter: Platzöder, Michael Christian
(86) Internationale Anmeldenummer: PCT/EP2023/070764
(87) Internationale Veröffentlichungsnummer: WO 2024/033094

(56) Entgegenhaltungen:
- DE-A1- 102018 220 000
- DE-B3- 102021 116 151
- JP-A- 2018 132 666

## Beschreibung

Die vorliegende Erfindung betrifft ein mehrachsiges, insbesondere zweiachsiges, Mikroscannersystem sowie ein Verfahren, eine Vorrichtung und ein Computerprogramm(produkt) zur Steuerung eines Antriebs eines solchen Mikroscannersystems.

Bei Mikroscannern, die in der Fachsprache insbesondere auch als "MEMS-Scanner", "MEMS-Spiegel" oder auch "Mikrospiegel" oder im Englischen insbesondere als "microscanner" bzw. "micro-scanning mirror" oder "MEMS mirror" bezeichnet werden, handelt es sich um mikro-elektro-mechanische Systeme (MEMS) oder genauer um mikro-optoelektro-mechanische Systeme (MOEMS) aus der Klasse der Mikrospiegelaktoren zur dynamischen Modulation von elektromagnetischer Strahlung, insbesondere von sichtbarem Licht. Je nach Bauart kann die modulierend wirkende Bewegung eines Einzelspiegels translatorisch oder um zumindest eine Achse rotatorisch erfolgen. Im ersten Fall wird eine phasenschiebende Wirkung, im zweiten Fall die Ablenkung der einfallenden elektromagnetischen Strahlung erzielt. Im Weiteren werden Mikroscanner betrachtet, bei denen die modulierend wirkende Bewegung eines Einzelspiegels, zumindest auch, rotatorisch erfolgt. In Abgrenzung zu Spiegelarrays, bei denen die Modulation von einfallendem Licht über das Zusammenwirken mehrerer Spiegel auf einem einzigen MEMS-Bauelement erfolgt, wird die Modulation bei Mikroscannern typischerweise über einen einzelnen Spiegel je MEMS-Bauelement (Mikroscanner) erzeugt.

Mikroscanner können somit insbesondere zur Ablenkung von elektromagnetischer Strahlung eingesetzt werden, um mittels eines Ablenkelements ("Spiegel") einen darauf einfallenden elektromagnetischen Strahl bezüglich seiner Ablenkrichtung zu modulieren. Das kann insbesondere dafür genutzt werden, eine Lissajous-Projektion des Strahls in ein Beobachtungsfeld bzw. Projektionsfeld zu bewirken. So lassen sich beispielsweise bildgebende sensorische Aufgaben lösen oder auch Display-Funktionalitäten realisieren. Darüber hinaus können solche Mikroscanner auch dazu eingesetzt werden, Materialien in vorteilhafter Weise zu bestrahlen, insbesondere zu deren Bearbeitung. Mögliche andere Anwendungen liegen im Bereich der Beleuchtung oder Ausleuchtung bestimmter offener oder geschlossener Räume oder Raumbereiche mit elektromagnetischer Strahlung, beispielsweise im Rahmen von Scheinwerferanwendungen.

Mikroscanner bestehen in vielen Fällen aus einer Spiegelplatte (Ablenkplatte), die seitlich an elastisch dehnbaren Federn aufgehängt ist. Man unterscheidet einachsige Spiegel, die vorzugsweise nur um eine einzige Achse drehbar aufgehängt sein sollen, von zweiachsigen und mehrachsigen Spiegeln, bei denen Rotationen, insbesondere rotatorische Oszillationen, um eine entsprechende Anzahl verschiedener Achsen möglich sind, insbesondere simultan.

Ein Mikroscannersystem zum Ablenken eines elektromagnetischen Strahls kann somit insbesondere einen zweiachsigen Mikroscanner, also einen Mikroscanner mit zwei verschiedenen nicht-parallelen, insbesondere zueinander orthogonalen, Schwingungsachsen oder eine Kombination von mehreren einzelnen, insbesondere zwei, einachsigen Mikroscannern aufweisen, die so angeordnet sind, dass der einfallende Strahl nacheinander durch die verschiedenen einzelnen Mikroscanner des Mikroscannersystems abgelenkt werden kann um ein zweidimensionales Ablenkungsmuster, insbesondere eine Lissajous-Figur, zu erzeugen. Bei einem Mikroscannersystem mit einer Kombination aus zwei oder drei einachsigen Mikroscannern können deren nicht-parallele Schwingungsachsen insbesondere paarweise orthogonal zueinander liegen.

Sowohl im Falle bildgebender Sensorik als auch im Falle einer Display-Funktion dient ein mehrachsiges Mikroscannersystem dazu, elektromagnetische Strahlung wie z.B. einen Laserstrahl oder aber einen geformten Strahl einer beliebigen anderen Quelle elektromagnetischer Strahlung mindestens zweidimensional, z.B. horizontal und vertikal, abzulenken, um damit eine Objektoberfläche innerhalb eines Beobachtungsfeldes abzutasten bzw. auszuleuchten. Insbesondere kann dies so erfolgen, dass der gescannte Laserstrahl eine rechteckige Fläche auf einer Projektionsfläche im Projektionsfeld überstreicht. Somit kommen bei diesen Anwendungsfällen Mikroscannersysteme mit zumindest zweiachsigem Mikroscanner oder mit mehreren, insbesondere zwei, im optischen Pfad hintereinandergeschalteten einachsigen Mikroscannern zum Einsatz. Der Wellenlängenbereich der abzulenkenden Strahlung kann grundsätzlich aus dem gesamten Spektrum von kurzwelliger UV-Strahlung, über den VIS-Bereich, NIR-Bereich, IR-Bereich, FIR-Bereich bis hin zu langwelliger Terraherz- und Radarstrahlung ausgewählt sein.

Speziell bei sogenannten Lissajous-Mikroscannern bzw. Lissajous-Mikroscannersystemen, werden zwei nicht-parallele, insbesondere zueinander orthogonale Schwingungsachsen simultan, insbesondere in Resonanz, betrieben, um dabei eine Trajektorie der abgelenkten Strahlung in Form einer Lissajous-Figur zu erzeugen. Auf diese Weise lassen sich in beiden Achsen große Amplituden erreichen.

Aus der EP 2 514 211 B1 ist eine Ablenkeinrichtung für ein Projektionssystem zum Projizieren von Lissajous-Figuren auf ein Beobachtungsfeld bekannt, die ausgebildet ist, einen Lichtstrahl um mindestens eine erste und eine zweite Ablenkachse zur Erzeugung von Lissajous-Figuren umzulenken.

Die JP 2018 132666 A betrifft eine optische Abtaststeuereinheit, die auf der Grundlage eines Abweichungsbetrags zwischen einer Resonanzfrequenz und einer von einer Abweichungsbetrags-Erfassungseinheit erfassten Ansteuerfrequenz bestimmt, ob sowohl die Frequenzen des ersten als auch des zweiten Ansteuersignals geändert werden, während ein Frequenzverhältnis zweier Achsen beibehalten wird, oder ob das Frequenzverhältnis zweier Achsen zusammen mit der Änderung der Frequenzen des ersten und des zweiten Ansteuersignals geändert wird, und die eine optische Abtasteinheit in Abhängigkeit von dem bestimmten Ergebnis ansteuert.

Die DE 10 2021 116151 B3 betrifft ein Projektionssystem zum Projizieren von Lissajous-Figuren auf ein Beobachtungsfeld mit einem Mikroscanner. Dieser hat eine Ablenkeinheit mit einem Ablenkelement zum Ablenken eines einfallenden elektromagnetischen Strahls, eine Tragestruktur und eine Federeinrichtung, mittels der das Ablenkelement gimballos so an der Tragestruktur aufgehängt ist, dass es relativ zur Tragestruktur simultan eine erste rotatorische Oszillation um eine erste Schwingungsachse und eine zweite rotatorische Oszillation um eine dazu orthogonale zweite Schwingungsachse ausführen kann, um durch Ablenken eines während der simultanen Oszillationen auf das Ablenkelement einfallenden elektromagnetischen Strahls eine nichtlineare Lissajous-Projektion zu bewirken. Der Mikroscanner hat ferner eine Steuerungseinrichtung zum Ansteuern einer Antriebseinrichtung zum Antrieb der Ablenkeinheit so, dass dabei eine jeweilige, Antriebswirkung bezüglich zumindest einer der Oszillationen des Ablenkelements individuell einstellbar ist. Die Federeinrichtung ist des Weiteren so ausgebildet, dass sie eine amplitudenabhängige gegenseitige Kopplung zwischen den Oszillationen vermittelt. Die Steuerungseinrichtung ist zudem eingerichtet, die Antriebseinrichtung in Abhängigkeit von zumindest einer erfassten Zustandsgröße der ersten Oszillation anzusteuern, um eine Antriebswirkung auf die zweite Oszillation unter Beeinflussung zumindest einer Zustandsgröße der zweiten Oszillation hervorzurufen, die einem Unterschreiten eines vorbestimmten Mindestfrequenzabstands zwischen den jeweiligen momentanen Schwingungsfrequenzen der ersten Oszillation und der zweiten Oszillation entgegenwirkt.

Die DE 10 2018 220000 A1 betrifft eine Vorrichtung umfassend ein Reflektorsystem und eine Rückkopplungsschaltung. Das Reflektorsystem weist einen Träger, einen Reflektor und eine Federstruktur auf, die den Reflektor für eine Abtastbewegung des Reflektors in zwei orthogonalen Oszillationsmodi an dem Träger aufhängt. Jeder Oszillationsmodus weist einen Frequenzgang auf, der bei einer natürlichen Resonanzfrequenz mit einer anfänglichen Bandbreite seinen Höhepunkt erreicht. Das Reflektorsystem umfasst eine erste Wandlerstruktur zur mechanischen Betätigung des Reflektors und eine zweite Wandlerstruktur zum Erzeugen eines oder mehrerer Erfassungssignale, die eine mechanische Bewegung des Reflektors darstellen. Die Rückkopplungsschaltung ist dazu ausgebildet, von einem Wandler der zweiten Wandlerstruktur ein Erfassungssignal zu empfangen und an einen Wandler der ersten Wandlerstruktur ein Antriebssignal auf der Basis des empfangenen Erfassungssignals zu erzeugen. Für jeden der zwei Oszillationsmodi ist die Rückkopplungsschaltung dazu ausgebildet, eine Amplitude und Frequenz des Antriebssignals auf einen nicht-linearen Schwingungsbereich einzustellen, bei dem eine Frequenzverschiebung bei der Spitzenfrequenz zumindest das Zehnfache der anfänglichen Bandbreite beträ> die Amplitude des Antriebssignals im Verhältnis zu einer Wellenform eines Modulationssignals zu variieren; und eine Frequenz der Modulationssignalkomponente dahingehend festzulegen, kleiner als die Frequenzverschiebung bei der Spitzenfrequenz zu sein. Die Konfiguration stellt eine einfache Weise dar, einen Bildbereich eines Abtastmikrospiegels zu verbreitern.

Es ist eine Aufgabe der Erfindung, den Betrieb von Lissajous-Mikroscannern, insbesondere hinsichtlich von Anwendungen im Bereich von Projektions-Displays, weiter zu verbessern, insbesondere im Hinblick auf ein Sichern einer hohen erreichbaren Bildqualität für die Ausleuchtung des Beobachtungsfelds.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der hier vorgestellten Lösung betrifft ein Verfahren zur Steuerung eines Antriebs für ein mehrachsiges, insbesondere zweiachsiges, Mikroscannersystem. Im Rahmen des Verfahrens wird eine Antriebseinrichtung für das Mikroscannersystem derart angesteuert (d.h. es werden dazu geeignete Steuersignale generiert und ausgegeben), dass das Mikroscannersystem dadurch veranlasst wird, eine erste rotatorische Oszillation eines Ablenkelements des Mikroscannersystems um eine erste Schwingungsachse mittels einer Anregung mit einer ersten Antriebsfrequenz und simultan zur ersten Oszillation eine zweite rotatorische Oszillation eines Ablenkelements des Mikroscannersystems um eine zur ersten Schwingungsachse nicht-parallele, insbesondere orthogonal dazu verlaufende, zweite Schwingungsachse mittels einer Anregung mit einer zweiten Antriebsfrequenz anzutreiben, wobei diese Antriebsfrequenzen jeweils zeitlich variiert werden.

Das Verfahren weist ferner auf:
(i) einen ersten Verfahrensmodus, bei dem die Ansteuerung der Antriebseinrichtung (430) so erfolgt, dass die erste Oszillation und die zweite Oszillation unabhängig voneinander mittels je einem individuellen Phasenregelkreis (305a; 300b) individuell geregelt werden; und
(ii) einen zweiten Verfahrensmodus, bei dem die Ansteuerung der Antriebseinrichtung derart erfolgt, dass das zeitliche Variieren der Antriebsfrequenzen mittels eines beiden Oszillationen gemeinsamen Phasenregelkreises zum Regeln der Phasen beider Oszillationen so erfolgt, dass zugleich anhand der Regelung einer Veränderung des Frequenzverhältnisses zwischen den beiden Antriebsfrequenzen entgegengewirkt wird,
wobei im Rahmen des Verfahrens mittels einer Schalteinrichtung (160a,160b) ein Umschalten zwischen den beiden Verfahrensmodi erfolgt.

Das Umschalten kann vom ersten Verfahrensmodus in den zweiten Verfahrensmodus erfolgen und/oder umgekehrt. Insbesondere ist auch ein mehrfaches Umschalten denkbar.

Während sich also im zweiten Verfahrensmodus die Antriebsfrequenzen selbst dabei verändern, wird einer Veränderung des Frequenzverhältnisses entgegengewirkt.

Unter dem Begriff "Ablenkelement" (und Abwandlungen davon), wie hierin verwendet, ist insbesondere ein Körper zu verstehen, der eine reflektierende Fläche (Spiegelfläche) aufweist, die glatt genug ist, dass an der Spiegelfläche reflektierte elektromagnetische Strahlung, z.B. sichtbares Licht, nach dem Reflexionsgesetz seine Parallelität behält und somit ein Abbild entstehen kann. Die Rauheit der Spiegelfläche muss dafür kleiner sein als etwa die halbe Wellenlänge der elektromagnetischen Strahlung. Das Ablenkelement kann insbesondere als Spiegelplatte mit zumindest einer Spiegelfläche ausgebildet sein oder eine solche aufweisen. Insbesondere kann die Spiegelfläche selbst aus einem anderen Material bestehen als der sonstige Körper des Ablenkelements, z.B. aus einem Metall, insbesondere einem (z.B. per chemischer Gasphasenabscheidung (CVD) oder Sputtern) abgeschiedenen Metall. Bei dem vorgenannten lösungsgemäßen Mikroscannersystem können die erste Oszillation und die zweite Oszillation sich entweder auf ein selbes, dann mehrachsiges, Ablenkelement des Mikroscannersystems beziehen, oder aber auf verschiedene in einem selben Strahlengang angeordnete Ablenkelemente, insbesondere Ablenkelemente von einachsigen Mikroscannern des Mikroscannersystems.

Unter dem Begriff "Lissajous-Projektion" (und Abwandlungen davon), wie hierin verwendet, ist insbesondere eine Abtastung (Scanning) eines Beobachtungsfelds mit Hilfe von elektromagnetischer Strahlung zu verstehen, die durch zumindest zwei zueinander nicht-parallele, insbesondere orthogonale sinusförmige Schwingungen (Oszillationen) einer die Strahlung in das Beobachtungsfeld ablenkenden Ablenkvorrichtung, insbesondere eines zumindest zweiachsigen Mikroscannersystems, bewirkt wird.

Unter dem Begriff "Achse" bzw. gleichbedeutend "Schwingungsachse" (und Abwandlungen davon), wie hierin verwendet, ist eine Drehachse (Rotationsachse) einer, insbesondere oszillierenden, rotatorischen Bewegung zu verstehen. Sie ist somit eine Gerade, die eine Rotation oder Drehung definiert oder beschreibt.

Unter dem Begriff "Antriebseinrichtung" (und Abwandlungen davon), wie hierin verwendet, ist insbesondere eine Vorrichtung zu verstehen, die einen oder mehrere Aktuatoren zum Antrieb der Schwingungsbewegungen eines oder mehrerer Ablenkelemente eines Mikroscannersystems aufweist. Im Falle eines Mikroscannersystems mit mehreren Mikroscannern kann unter einer Antriebseinrichtung insbesondere auch eine Vorrichtung zu verstehen sein, die einen oder mehrere Aktuatoren zum Antrieb der jeweiligen Ablenkeinheiten dieser Mikroscanner aufweist.

Die hierein gegebenenfalls verwendeten Begriffe "umfasst", "beinhaltet", "schließt ein", "weist auf', "hat", "mit", oder jede andere Variante davon sollen eine nicht ausschließliche Einbeziehung abdecken. So ist beispielsweise ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives oder und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier gegebenenfalls verwendet wird, ist im Sinne von "zwei oder mehr" zu verstehen.

Unter dem Begriff "konfiguriert" oder "eingerichtet" eine bestimmte Funktion zu erfüllen, (und jeweiligen Abwandlungen davon), wie er hier gegebenenfalls verwendet wird, ist zu verstehen, dass eine diesbezügliche Vorrichtung oder Komponente davon bereits in einer Ausgestaltung oder Einstellung vorliegt, in der sie die Funktion ausführen kann oder sie zumindest so einstellbar - d.h. konfigurierbar - ist, dass sie nach entsprechender Einstellung die Funktion ausführen kann. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, so dass das Konfigurieren mittels einer Auswahl einer dieser Konfigurationen bzw. Betriebsmodi erfolgen kann.

Wenn mehrachsige Mikroscannersysteme zur Bildprojektion mit Lissajous-Figuren genutzt werden, wird die dabei erreichbare Bildqualität maßgeblich durch das Verhältnis der beiden Oszillationsfrequenzen bestimmt. Bereits geringe Veränderungen dieses Verhältnisses können hier zu erkennbaren Störungen im Projektionsbild, wie etwa zu einem Flackern des Bildes oder zu einer schlechten Abdeckung oder Liniendichte, insbesondere zu Bildlücken führen.

Werden die Antriebsfrequenzen der beiden Oszillationen unabhängig voneinander verstimmt (z.B. um Temperaturschwankungen oder sonstige Störgrößen auszugleichen), dann schwankt das Frequenzverhältnis zwangsläufig. Dies ist insbesondere im geregelten (closed-loop) Betrieb der Fall.

Das Verfahren nach dem ersten Aspekt löst diese Problematik, indem die verschiedenen Oszillationen in der Weise gesteuert werden, dass das zeitliche Variieren (Verstimmen) von deren Antriebsfrequenzen so erfolgt, dass zugleich einer Veränderung des Frequenzverhältnisses zwischen den beiden Antriebsfrequenzen entgegengewirkt wird. Das Frequenzverhältnis wird also möglichst wenig geändert, selbst wenn die Antriebsfrequenzen selbst verstimmt werden.

Die Antriebsfrequenzen lassen sich somit nur noch in Abhängigkeit voneinander so verstimmen, dass dabei das Frequenzverhältnis möglichst wenig geändert wird, es also stabilisiert wird. Im eingeschwungenen Zustand der Oszillationen wird dadurch im Wesentlichen immer dieselbe, durch das Frequenzverhältnis bestimmte, Lissajous-Figur als Trajektorie der abgelenkten Strahlung abgefahren. Werden die Antriebsfrequenzen nun erhöht oder vermindert (z.B. um Temperaturschwankungen und dadurch bedingte Änderungen der Resonanzfrequenzen des Ablenkelements bzw. der Ablenkelemente des Mikroscannersystems auszugleichen), bleibt die Form der Lissajous-Figur, zumindest im Wesentlichen, erhalten. Es ändert sich lediglich die Geschwindigkeit, mit der die Figur durchlaufen wird, geringfügig. Dadurch kann eine gleichmäßige, insbesondere flackerarme und stabile, und somit qualitativ hochwertige Projektion, d.h. eine hohe Bildqualität, auch über einen längeren Beobachtungszeitraum hinweg erreicht und erhalten werden.

Nachfolgend werden zunächst verschiedene beispielhafte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der vorliegenden Lösung kombiniert werden können.

Bei einigen Ausführungsformen ist das Frequenzverhältnis eine mittels zumindest einer Parametrisierung der Steuerung einstellbare Größe und das Verfahren umfasst des Weiteren ein Einstellen dieser Größe auf einen Sollwert. Auf diese Weise lässt sich anhand der Einstellung eine gewünschte Lissajous-Figur aus einer Vielzahl verschiedener Möglichkeiten auswählen. Das ermöglicht es insbesondere, eine anwendungs- oder situationsabhängig optimierte Auswahl zu treffen.

Insbesondere kann gemäß einiger dieser Ausführungsformen das Einstellen dieser Größe auf einen Sollwert erfolgen, während die Oszillationen durch die Antriebseinrichtung angetrieben werden. Somit ist sogar eine dynamische Auswahl von Lissajous-Figuren während des Betriebs des Mikroscanners ermöglicht, also ein dynamischer Wechsel von Figuren. Dies kann insbesondere auch automatisiert gemäß einem vorbestimmten Schema erfolgen, welches eine zeitliche Abfolge verschiedener Einstellungen definiert.

Bei einigen Ausführungsformen erfolgt das Entgegenwirken gegen eine Veränderung des Frequenzverhältnisses zwischen den beiden Antriebsfrequenzen, zumindest in einem eingeschwungenen Zustand der beiden Oszillationen, derart, dass dabei das Frequenzverhältnis in einem Bereich von ± 1%, insbesondere in einem Bereich von ± 0,01%, und bevorzugt in einem Bereich von ± 0,001%, seines Ausgangswerts zu Beginn des zeitlichen Variierens der Antriebsfrequenzen gehalten wird, insbesondere durch eine entsprechend eingestellte Regelung. So lässt sich eine hohe Stabilität der resultierenden Lissajous-Figur erreichen, um eine besonders hohe Bildqualität für die Ausleuchtung des Beobachtungsfelds zu erzielen.

Unter dem Begriff "eingeschwungener Zustand", wie hier verwendet, ist insbesondere ein Zustand eines schwingungsfähigen Systems, hier des Mikroscannersystems bzw. seines zumindest einen Ablenkelements, nach einer externen Anregung oder bei einer fortbestehenden externen Anregung zu verstehen, bei dem die Zustandsvariablen Amplitude, Frequenz und Phase (i) des schwingungsfähigen Systems (insbesondere jeweils auf die Winkelposition zur jeweiligen Schwingungsachse des zumindest einen Ablenkelements bezogen), (ii) bei fortgeführter Anregung auch des Anregungssignals, zumindest näherungsweise konstant werden.

Bei einigen Ausführungsformen umfasst das Ansteuern der Antriebseinrichtung ein Regeln der Oszillationen, wobei das zeitliche Variieren der Antriebsfrequenzen so erfolgt, dass zugleich anhand der Regelung einer Veränderung des Frequenzverhältnisses zwischen den beiden Antriebsfrequenzen entgegengewirkt wird. So lässt sich insbesondere auch dann eine hohe Stabilität der resultierenden Lissajous-Figur erreichen, um eine besonders hohe Bildqualität für die Ausleuchtung des Beobachtungsfelds zu erzielen, wenn sich ohne Regelung die Zustandsparameter der Schwingung und somit auch die resultierende Lissajous-Figur verändern würden. In der Regel sind beispielsweise die Resonanzfrequenzen des bzw. der Ablenkelemente des Mikroscannersystems insbesondere temperaturabhängig, so dass anhand der Regelung die Antriebsfrequenzen für die Schwingungsachsen angepasst werden können, um das vorgesehene Frequenzverhältnis zwischen den Antriebsfrequenzen aufrecht zu erhalten.

Dabei wird bei einigen dieser Ausführungsformen für die Regelung eine Regelgröße verwendet, die (i) sowohl von einem ersten sensorisch erfassten Wert zumindest einer physikalischen Größe abhängt, die in einem Abhängigkeitsverhältnis mit einer Resonanzfrequenz der ersten Schwingungsachse steht, (ii) als auch von einem zweiten sensorisch erfassten Wert zumindest einer zweiten physikalischen Größe abhängt, die in einem Abhängigkeitsverhältnis mit einer Resonanzfrequenz der zweiten Schwingungsachse steht. Somit wird hier eine Regelgröße für die Regelung berücksichtigt, die beide Schwingungsachsen betrifft, wodurch das Aufrechterhalten des Frequenzverhältnisses der Antriebsfrequenzen besonders effektiv und mit hoher Dynamik bzw. geringer Latenz erreicht werden kann.

Unter dem Begriff "Abhängigkeitsverhältnis" zwischen zwei Größen (und Abwandlungen davon), wie hierin verwendet, ist zu verstehen, dass zumindest eine der beiden Größen von der anderen Größe abhängt. Die Abhängigkeit kann sich insbesondere im Sinne einer mathematischen Funktion oder allgemeiner im Sinne einer Relation oder Korrelation ausdrücken. Entscheidend ist vorliegend, dass aus dem gemessenen Wert der zumindest einen Größe auf eine davon in Abhängigkeit stehende Resonanzfrequenz geschlossen werden kann. Die Abhängigkeit kann einseitig oder wechselseitig sein.

Bei einigen Ausführungsformen gilt für die physikalische Größe, dass sie einen der folgenden Zustände des Mikroscannersystems (insbesondere eines Abschnitts oder Bestandteils davon) oder eine Kombination von zumindest zwei dieser Zustände oder Zustandsveränderungen charakterisiert oder davon abhängt: (i) eine Verschiebung einer gemessenen Resonanzfrequenz zumindest einer der Oszillationen; (ii) eine Temperatur; (iii) eine mechanische Spannung oder Dehnung; (iv) eine Schwingungsamplitude des bzw. eines Ablenkelements; (v) eine bei zumindest einer der Oszillationen auftretende Phaseninstabilität; (vi) ein Überschreiten der jeweiligen Stellgröße eines Phasenregelkreises für die Phase zumindest einer der Oszillationen; (vii) eine Phasendifferenz zwischen einem Antriebssignal zur Ansteuerung der Antriebseinrichtung und einem Messsignal, das eine gemessene Auslenkung des Ablenkelements repräsentiert; (viii) eine Veränderung der eingestrahlten elektromagnetischen Strahlungsleistung, die das Ablenkelement durch Absorption aufnimmt; (ix) ein Schwingungszustands eines Referenzoszillators im Mikroscannersystem, oder dessen Änderung, wobei der Schwingungszustand des Referenzoszillators bzw. dessen Änderung mit einem Schwingungszustand des bzw. zumindest eines Ablenkelements bzw. dessen Änderung korreliert, insbesondere in einem bestimmten Abhängigkeitsverhältnis steht. So kann, etwa nach einer vorausgehenden Kalibrierung, von dem erfassten Schwingungszustand des Referenzoszillators oder dessen Änderung auf den Schwingungszustand des bzw. zumindest eines Ablenkelements bzw. dessen Änderung geschlossen werden. Als Schwingungszustand kommen insbesondere eine Amplitude, eine Frequenz und/oder eine Phase der jeweiligen Oszillation oder eine Kombination aus zwei oder mehr dieser Größen in Frage.

All diesen Zuständen bzw. Zustandsänderungen ist gemein, dass sie einerseits sensorisch gut erfassbar sind und andererseits in einem Abhängigkeitsverhältnis mit den aktuellen Resonanzfrequenzen des Mikroscannersystems stehen und somit als Eingangsgröße für die Regelung der Antriebsfrequenz bzw. Antriebsfrequenzen geeignet sind.

Bei einigen Ausführungsformen wird die Regelgröße anhand einer Mittelwertbildung aus der ersten physikalischen Größe und der zweiten physikalische Größe als Eingangsgrößen (für die Mittelwertbildung) bestimmt. Dies ist zum einen besonders einfach zu implementieren und liefert zum anderen eine gute und bezüglich beider Schwingungsachsen symmetrische Regelungsqualität.

Bei einigen Ausführungsformen wird die Regelgröße anhand einer Schlechtpunktregelung bezüglich der ersten physikalischen Größe und der zweiten physikalische Größe als Eingangsgrößen (für die Schlechtpunktregelung) bestimmt. Unter dem Begriff "Schlechtpunktregelung", wie hier verwendet, ist insbesondere eine Regelung zu verstehen, bei der die für das Erreichen eines guten Führungsverhaltens der Regelung kritischere der beiden physikalischen Größe als Führungsgröße dient. Insbesondere kann demensprechend auf die Phase derjenigen Achse geregelt werden, die eher droht, aus der Resonanz zu fallen.

Bei einigen dieser Ausführungsformen wird zum Aufschwingen der Oszillationen aus einem Ruhezustand oder wenn ein Auftreten einer Störung zumindest einer der Oszillationen detektiert wurde, der erste Verfahrensmodus eingesetzt und das Umschalten vom ersten Verfahrensmodus in den zweiten Verfahrensmodus erfolgt, wenn nachfolgend detektiert wird, dass sich die beiden Oszillationen in einem jeweiligen eingeschwungenen Zustand befinden. Auf diese Weise kann das Aufschwingen bis in den eingeschwungenen Zustand schnell und insbesondere auf solche Weise erfolgen, dass die jeweilige Antriebsfrequenz jeder der Oszillationen zumindest näherungsweise auf die Resonanzfrequenz der zugeordneten Oszillation gebracht wird. Danach wird dann die derart über das Frequenzverhältnis der aktuellen Resonanzfrequenzen eingestellte Lissajous-Figur aufrechterhalten, indem zwar bei sich ändernden Resonanzfrequenzen die Antriebsfrequenzen entsprechen angepasst werden, dabei das Frequenzverhältnis jedoch beibehalten wird. Das Detektieren des eingeschwungenen Zustands kann insbesondere anhand einer Messung der jeweiligen Schwingungsamplitude zumindest einer der Oszillationen erfolgen, insbesondere so, dass der eingeschwungene Zustand dann als solcher detektiert wird, wenn die Amplitude gemäß einem vordefinierten Stabilitätskriterium, z.B. einem Verbleiben in einem vordefinierten Schwankungsbereich, als stabil erkannt wird.

Bei einigen Ausführungsformen bildet das Ablenkelement des Mikroscannersystems bezüglich zumindest einer seiner Schwingungsachsen einen nicht-linearen Oszillator, insbesondere einen Duffing-Oszillator oder einen Oszillator, der in guter Näherung als Duffing-Oszillator beschrieben werden kann (z.B. maximal 5% Amplitudenabweichung gegenüber einem optimal approximierten idealen Duffing-Oszillator). Das zeitliche Variieren der Antriebsfrequenzen erfolgt hierbei so, dass zugleich einer Veränderung des Frequenzverhältnisses zwischen den beiden Antriebsfrequenzen derart entgegengewirkt wird, dass das Frequenzverhältnis in einem bestimmten Frequenzverhältnisbereich gehalten wird, wobei der Frequenzbereich der jeweiligen Antriebsfrequenzen unterhalb einer Frequenz des jeweiligen nicht-linearen Oszillators liegt, bei der er bei ansteigender Antriebsfrequenz eine maximale Amplitude erreicht. Eine untere Grenze dieses Frequenzbereichs kann insbesondere bei der Resonanzfrequenz des nichtlinearen Oszillators (bei freier Schwingung) liegen. So wird erreicht, dass die Vorteile eines nichtlinearen Oszillators, insbesondere im Hinblick auf eine hohe Amplituden- und Phasenstabilität gegenüber, insbesondere temperaturbedingten, Schwankungen oder Verschiebungen der Antriebsfrequenz oder Resonanzfrequenz, genutzt werden können, während hysteresebedingte, unerwünschte Amplituden- und/oder Phasensprünge, wie sie bei eine Hysterese zeigenden nichtlinearen Oszillatoren an bestimmten Sprungstellen auftreten können, vermieden werden.

Ein zweiter Aspekt der vorliegenden Lösung betrifft eine Steuerungsvorrichtung zum Steuern eines Antriebs für ein mehrachsiges Mikroscannersystem, wobei die Steuerungsvorrichtung konfiguriert ist, das Verfahren nach dem ersten Aspekt, insbesondere gemäß einer oder mehreren der hierin beschriebenen Ausführungsformen dazu, auszuführen.

Unter dem Begriff "Steuerungsvorrichtung", wie hierin verwendet, ist insbesondere eine Vorrichtung, insbesondere ein sogenanntes "eingebettetes System" (Embedded System), zu verstehen, das für die Integration in ein Mikroscannersystem geeignet und dazu eingerichtet ist, einen Antrieb, insbesondere eine Antriebseinrichtung, für ein mehrachsiges Mikroscannersystem im Sinne einer Steuerung oder Regelung über entsprechende Signale anzusteuern. Insbesondere kann die Steuerungsvorrichtung auch Signal- oder Dateneingänge aufweisen, um beispielsweise Sensorsignale oder Daten von Sensoren oder anderen Komponenten des Mikroscannersystems empfangen zu können.

Die Steuerungsvorrichtung weist einen beiden Oszillationen gemeinsamen Phasenregelkreis zum Regeln der Phasen beider Oszillationen gemäß dem Verfahren nach dem ersten Aspekt unter Verwendung einer Regelung auf. Auf diese Weise lässt sich das Verfahren besonders effizient implementieren, insbesondere als Hardwarelösung mittels einer Schaltung, insbesondere einer integrierten Schaltung. Mit einer solchen hardwarebasierten Implementierung lässt sich insbesondere auch eine hohe Performanz erreichen.

Des Weiteren weist die Steuerungsvorrichtung auf: (i) je einen individuellen Phasenregelkreis zur jeweils individuellen Regelung der beiden Oszillationen; und (ii) eine Schalteinrichtung zum Umschalten zwischen den Verfahrensmodi. Dabei ist die Steuerungsvorrichtung konfiguriert, die Phasen beider Oszillationen gemäß dem Verfahren nach dem ersten Aspekt zu regeln und zum Regeln der Phasen beider Oszillationen im ersten Verfahrensmodus für jede Oszillation den ihr jeweils zugeordneten individuellen Phasenregelkreis und im zweiten Verfahrensmodus den gemeinsamen Phasenregelkreis einzusetzen.

Ein dritter Aspekt der vorliegenden Lösung betrifft ein Mikroscannersystem mit (i) zumindest einem Ablenkelement das eine erste rotatorische Oszillation um eine erste Schwingungsachse ausführen kann und mit zumindest einem Ablenkelement das simultan zur ersten Oszillation eine zweite rotatorische Oszillation um eine zur ersten Schwingungsachse nicht-parallele, insbesondere orthogonale, zweite Schwingungsachse ausführen kann (und insbesondere dasselbe Ablenkelement sein kann wie das, welches auch die erste Oszillation ausführt), um durch reflektierendes Ablenken eines während der simultanen Oszillationen auf das Mikroscannersystem einfallenden elektromagnetischen Strahls eine Lissajous-Projektion in ein Beobachtungsfeld zu bewirken; (ii) eine Antriebseinrichtung zum Antrieb der simultanen Oszillationen; und (iii) eine Steuerungsvorrichtung nach dem zweiten Aspekt zur Ansteuerung der Antriebseinrichtung.

Bei einigen Ausführungsformen bildet das Ablenkelement des Mikroscanners bezüglich zumindest einer seiner Schwingungsachsen einen nicht-linearen Oszillator. insbesondere einen Duffing-Oszillator oder einen Oszillator, der in guter Näherung als Duffing-Oszillator beschrieben werden kann.

Insbesondere kann dabei die Steuerungsvorrichtung konfiguriert sein, die Antriebseinrichtung zumindest zum Antrieb des nicht-linearen Oszillators derart anzusteuern, dass das zeitliche Variieren der Antriebsfrequenzen so erfolgt, dass das Frequenzverhältnis in einem bestimmten Frequenzverhältnisbereich gehalten wird, wobei der Frequenzbereich der jeweiligen Antriebsfrequenzen unterhalb einer Frequenz des jeweiligen nicht-linearen Oszillators liegt, bei der er bei ansteigender Antriebsfrequenz eine maximale Amplitude erreicht. Eine untere Grenze dieses Frequenzbereichs kann insbesondere bei der Resonanzfrequenz des nichtlinearen Oszillators (bei freier Schwingung) liegen. So wird erreicht, dass die Vorteile eines nichtlinearen Oszillators, insbesondere im Hinblick auf eine hohe Amplituden- und Phasenstabilität gegenüber, insbesondere temperaturbedingten, Schwankungen oder Verschiebungen der Antriebsfrequenz oder Resonanzfrequenz, genutzt werden können, während hysteresebedingte, unerwünschte Amplituden- und/oder Phasensprünge, wie sie bei eine Hysterese zeigenden nichtlinearen Oszillatoren an bestimmten Sprungstellen auftreten können, vermieden werden.

Ein vierter Aspekt der vorliegenden Lösung betrifft ein Computerprogramm oder Computerprogrammprodukt mit Anweisungen, die bei ihrer Ausführung auf zumindest einem Prozessor der Steuerungsvorrichtung nach dem zweiten Aspekt diese veranlassen, das Verfahren nach dem ersten Aspekt zur Steuerung eines Antriebs für ein mehrachsiges Mikroscannersystem auszuführen.

Das Computerprogramm kann insbesondere auf einem nichtflüchtigen Datenträger gespeichert sein. Bevorzugt ist dies ein Datenträger in Form eines optischen Datenträgers oder eines Flashspeichermoduls. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei auf einer Datenverarbeitungseinheit, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmodulen aufweisen. Die Module können insbesondere dazu konfiguriert sein oder jedenfalls so einsetzbar sein, dass sie im Sinne von verteiltem Rechnen (engl. "Distributed computing" auf verschiedenen Geräten (Computern bzw. Prozessoreinheiten ausgeführt werden, die geografisch voneinander beabstandet und über ein Datennetzwerk miteinander verbunden sind.

Das Mikroscannersystem, insbesondere die Steuerungsvorrichtung, kann entsprechend einen Programmspeicher aufweisen, in dem das Computerprogramm abgelegt ist. Alternativ kann das Mikroscannersystem bzw. die Steuerungsvorrichtung auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere um mit diesem Daten auszutauschen, die während des Ablaufs des Verfahrens bzw. Computerprogramms Verwendung finden oder Ausgaben des Computerprogramms darstellen.

Die in Bezug auf den ersten Aspekt der Erfindung erläuterten Merkmale und Vorteile gelten entsprechend auch für die weiteren Aspekte der Erfindung.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
**Fig. 1** schematisch eine herkömmliche Steuerungsvorrichtung für den Antrieb eines zweiachsigen Mikroscannersystems, mit getrennten Phasenregelungen für die beiden Schwingungsachsen;
**Fig. 2** schematisch ein Ausführungsbeispiel einer Steuerungsvorrichtung mit einem frequenzverhältnisstabilisierenden kombinierten Phasenregelkreis für beide Schwingungsachsen;
**Fig. 3** schematisch ein Ausführungsbeispiel einer Steuerungsvorrichtung gemäß der beanspruchten Erfindung bei dem die Phasenregelungen aus den Figuren 1 und 2 kombiniert sind, um ein Umschalten zwischen zwei verschiedenen Verfahrensmodi bzw. Betriebsmodi der Steuerungsvorrichtung zu ermöglichen;
**Fig. 4** schematisch ein Ausführungsbeispiel eines Mikroscannersystems mit einer lösungsgemäßen Steuerungsvorrichtung, die insbesondere mithilfe eines Computerprogramms zur Ausführung des lösungsgemäßen Verfahrens implementiert sein kann; und
**Fig. 5** einen beispielhaften Amplituden- und Phasengang eines nichtlinearen Oszillators, insbesondere Duffing-Oszillators, jeweils als Funktion der auf die Resonanzkreisfrequenz *ω*₀ des Oszillators bezogenen Kreisfrequenz *ω*/*ω*₀, bezüglich einer Schwingungsachse eines Mikroscanners im Vergleich zu korrespondierenden Amplituden- und Phasengang bei einem harmonischen Oszillator.

In den Figuren bezeichnen gleiche Bezugszeichen gleiche, ähnliche oder einander entsprechende Elemente. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich werden. In den Figuren dargestellte Verbindungen und Kopplungen zwischen funktionellen Einheiten und Elementen können, soweit nicht ausdrücklich anders angegeben, auch als indirekte Verbindung oder Kopplung implementiert werden. Funktionale Einheiten können insbesondere als Hardware, Software oder eine Kombination aus Hardware und Software implementiert werden.

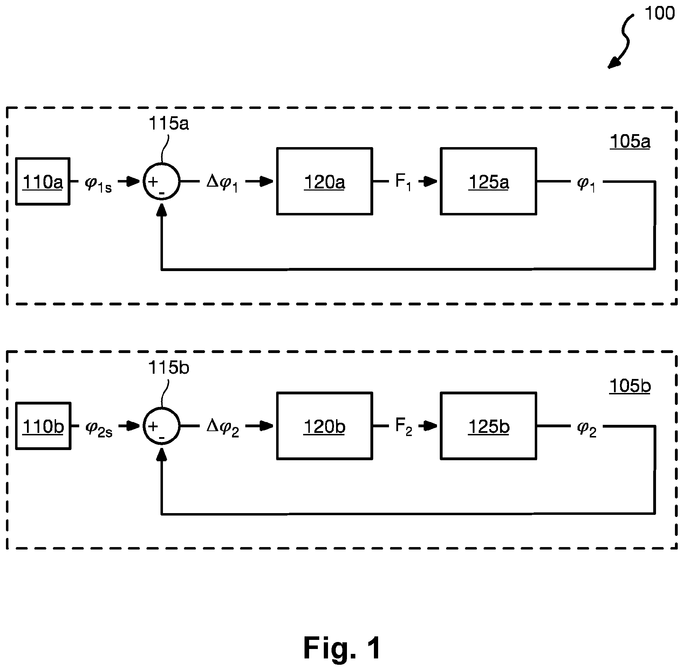

Die in **Fig. 1** gezeigte herkömmliche Steuerungsvorrichtung 100 für den Antrieb eines zweiachsigen Mikroscannersystems weist zwei getrennte Phasenregelkreise (engl. phase-locked-loops, PLLs) 105a und 105b auf, davon je eine für jede der beiden Schwingungsachsen des Mikroscannersystems. Neben den Phasenregelkreisen 105a und 105b kann die Steuerungsvorrichtung 100 noch weitere (nicht dargestellte) Komponenten und Schaltungen aufweisen, beispielsweise zur Stromversorgung der PLLs 105a und 105b.

Die PLL 105a für die erste Schwingungsachse weist eine Quelle 110a, z.B. eine Speichervorrichtung, für eine Führungsgröße in Form einer vorgegebenen Soll-Phasenlage *φ*₁ₛ auf. Ein Differenzglied 115a dient dazu, eine, typischerweise zeitabhängige, Regelabweichung Δ*φ*₁ als Differenz zwischen einer am Ausgang der PLL 105a gemessenen Ist-Phasenlage *φ*₁ und der Soll-Phasenlage *φ*₁ₛ zu bestimmen und sie einem Regler 120a, z.B. einem PI-Regler, zuzuführen. Der Regler 120a wiederum dient dazu, in Abhängigkeit von der Regelabweichung Δ*φ*₁ eine zeitabhängige Stellgröße in Form einer Antriebsfrequenz F₁ für die erste Schwingungsachse an eine Antriebseinrichtung des Mikroscannersystems zum Antrieb dieser Schwingungsachse auszugeben.

Die Antriebseinrichtung kann dabei insbesondere einen oder mehrere speziell dieser Schwingungsachse zugeordnete Aktuatoren, insbesondere Piezoaktuatoren, aufweisen. Mit dem Bezugszeichen 125a ist hier die nicht selbst zur Steuerungsvorrichtung gehörende Regelstrecke der PLL 105a bezeichnet, zu der Mikroscanner mit der ersten Schwingungsachse des Mikroscannersystems inklusive der Antriebseinrichtung zu dieser Schwingungsachse gehört. Mittels eines Sensors, insbesondere eines Piezosensors, des Mikroscannersystems wird die schon genannte tatsächliche Ist-Phasenlage *φ*₁ zur ersten Schwingungsachse gemessen und über eine Rückkopplungsschleife dem Differenzglied 115a zugeführt, um den Regelkreis zu schließen ("closed-loop").

Die PLL 105b für die zweite Schwingungsachse ist entsprechend aufgebaut und weist somit eine Quelle 110b für eine Führungsgröße in Form einer vorgegebenen Soll-Phasenlage *φ*₂ₛ auf. Des Weiteren ist ein Differenzglied 115b und ein Regler 120b vorgesehen, um in Abhängigkeit von einer durch das Differenzglied 115b bestimmten Regelabweichung Δ*φ*₂ eine zeitabhängige Stellgröße in Form einer Antriebsfrequenz F₂ für die zweite Schwingungsachse an eine Antriebseinrichtung des Mikroscannersystems zum Antrieb dieser zweiten Schwingungsachse auszugeben. Die Antriebseinrichtung kann dabei insbesondere einen oder mehrere speziell dieser Schwingungsachse zugeordnete Aktuatoren, z.B. Piezoaktuatoren, aufweisen. Sie kann auch mit der Antriebseinrichtung für die erste Schwingungsachse zu einer Einheit zusammengefasst sein. Mit dem Bezugszeichen 125b ist hier die nicht selbst zur Steuerungsvorrichtung gehörende Regelstrecke der PLL 105b bezeichnet, zu der Mikroscanner mit der zweiten Schwingungsachse des Mikroscannersystems inklusive der Antriebseinrichtung zu dieser Schwingungsachse gehört. Mittels eines Sensors, insbesondere eines Piezosensors, des Mikroscannersystems wird die schon genannte tatsächliche Ist-Phasenlage *φ*₂ zur zweiten Schwingungsachse gemessen und über eine Rückkopplungsschleife dem Differenzglied 115b zugeführt, um den Phasenregelkreis 105b zu schließen.

Mittels der Steuerungsvorrichtung 100 ist es möglich, die Phasen der Oszillationen zu den beiden Schwingungsachsen separat und unabhängig voneinander zu regeln, insbesondere auf solche Weise, dass die jeweilige Schwingungsachse in Resonanz gehalten wird. So lassen sich größtmögliche Schwingungsamplituden und somit Auslenkwinkel und dadurch bedingte Scanwinkel sowie eine hohe Energieeffizienz erreichen.

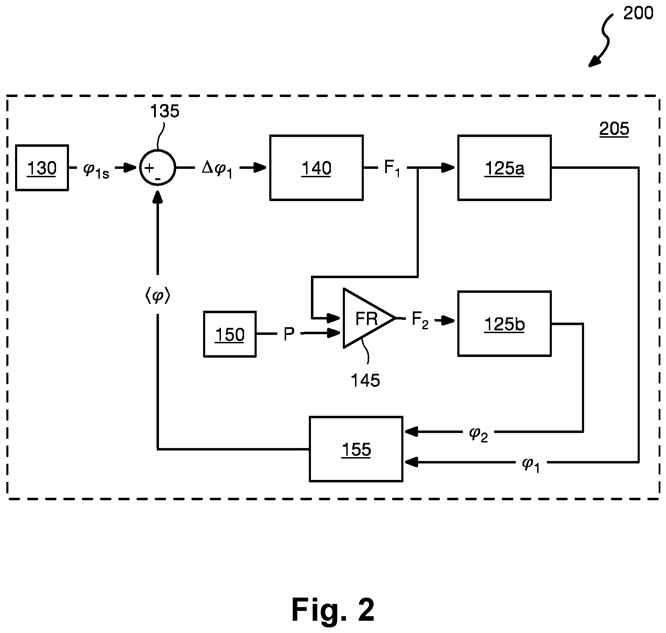

Bei dem in **Fig. 2** dargestellten Ausführungsbeispiel 200 einer Steuerungsvorrichtung wird ein kombinierter Phasenregelkreis (PLL) 205 für beide Schwingungsachsen eingesetzt. Neben dem Phasenregelkreis 205 kann die Steuerungsvorrichtung 200 noch weitere (nicht dargestellte) Komponenten und Schaltungen aufweisen, beispielsweise zur Stromversorgung der PLL 205. Im Rahmen der folgenden Beschreibung des ersten Ausführungsbeispiels 200 wird auch auf das dadurch ausführbare Verfahren zur Steuerung eines Antriebs für ein mehrachsiges Mikroscannersystem eingegangen.

Wie bei der PLL 105a für die erste Schwingungsachse aus Fig. 1, weist auch der Phasenregelkreis 205 eine Quelle 130, z.B. eine Speichervorrichtung, für eine Führungsgröße in Form einer vorgegebenen Soll-Phasenlage *φ*₁ₛ zur ersten Schwingungsachse (alternativ zur zweiten Schwingungsachse) auf. Ein Differenzglied 135 dient wiederum dazu, eine, typischerweise zeitabhängige, Regelabweichung Δ*φ*₁ als Differenz zwischen einer am Ausgang der PLL 205 gemessenen Ist-Phasenlage *φ*₁ und der Soll-Phasenlage *φ*₁ₛ zu bestimmen und sie einem Regler 140, z.B. einem Pl-Regler, zuzuführen. Der Regler 140 dient dazu, in Abhängigkeit von der Regelabweichung Δ*φ*₁ eine zeitabhängige Stellgröße in Form einer Antriebsfrequenz F₁ für die erste Schwingungsachse an eine Antriebseinrichtung des Mikroscannersystems zum Antrieb dieser ersten Schwingungsachse auszugeben.

Die Antriebseinrichtung kann dabei wiederum insbesondere einen oder mehrere speziell dieser Schwingungsachse zugeordnete Aktuatoren, insbesondere Piezoaktuatoren, aufweisen. Mit dem Bezugszeichen 125a ist hier eine nicht selbst zur Steuerungsvorrichtung 200 gehörende Regelstrecke der PLL 205 für die erste Schwingungsachse bezeichnet, zu der der Mikroscanner mit der ersten Schwingungsachse des Mikroscannersystems inklusive der Antriebseinrichtung zu dieser Schwingungsachse gehört. Mittels eines Sensors, insbesondere eines Piezosensors, des Mikroscannersystems wird die schon genannte tatsächliche Ist-Phasenlage *φ*₁ zur ersten Schwingungsachse gemessen und über eine Rückkopplungsschleife als eine erste Eingangsgröße einem Mittelwertberechnungsglied 155 zugeführt.

Die Stellgröße F₁ wird zusätzlich auch einem Frequenzwandler 145 zugeführt, welcher aus der Stellgröße F₁ eine zweite Stellgröße in Form einer Antriebsfrequenz F₂ für die zweite Schwingungsachse an eine Antriebseinrichtung des Mikroscannersystems zum Antrieb dieser zweiten Schwingungsachse auszugeben. Die Frequenzwandlung findet dabei so statt, dass sich ein vorbestimmtes Frequenzverhältnis FR = F₁/F₂ ergibt. Dieses Frequenzverhältnis FR ist über eine Parametrisierung P einstellbar, die an einer Konfigurationseinrichtung 150, die insbesondere eine Mensch-Maschine-Schnittstelle sein kann, festgelegt, insbesondere aus verschiedenen vordefinierten Optionen ausgewählt, werden kann.

Auch die Antriebseinrichtung für die zweite Schwingungsachse kann dabei wiederum insbesondere einen oder mehrere speziell dieser Schwingungsachse zugeordnete Aktuatoren, insbesondere Piezoaktuatoren, aufweisen. Mit dem Bezugszeichen 125b ist hier eine nicht selbst zur Steuerungsvorrichtung 200 gehörende Regelstrecke der PLL 205 für die zweite Schwingungsachse bezeichnet, zu der der Mikroscanner mit der zweiten Schwingungsachse des Mikroscannersystems inklusive der Antriebseinrichtung zu dieser Schwingungsachse gehört. Mittels eines Sensors, insbesondere eines Piezosensors, des Mikroscannersystems wird die schon genannte tatsächliche Ist-Phasenlage *φ*₂ zur zweiten Schwingungsachse gemessen und über eine Rückkopplungsschleife als eine zweiten Eingangsgröße dem Mittelwertberechnungsglied 155 zugeführt.

Das Mittelwertberechnungsglied 155 berechnet aus den beiden ihm als Eingangsgrößen zugeführten Ist-Phasenlage *φ1* und *φ2* deren Mittelwert 〈*φ*〉 und liefert diesen an das Differenzglied 135 zurück, um die Rückkopplungsschleife der PLL 205 zu schließen. Insgesamt stellt die PLL 205 somit einen Phasenregelkreis dar, bei dem im Rahmen der erfolgten Regelung das Frequenzverhältnis FR stabil gehalten wird, selbst wenn sich die Ist-Phasenlagen *φ*₁ und *φ*₂ derart ändern, dass in der Folge eine Verstimmung der Antriebsfrequenzen F₁ und F₂ durch den Regler 140 bewirkt wird.

Der Ausgang des Reglers 140 wirkt dabei auf beide Achsen gleichermaßen, wobei die beiden Antriebsfrequenzen F₁ und F₂ über ein (bei gegebener Parametrisierung P) festes Frequenzverhältnis miteinander gekoppelt sind. So kann das zeitliche Variieren der Antriebsfrequenzen so erfolgen, dass zugleich einer Veränderung des Frequenzverhältnisses FR zwischen den beiden Antriebsfrequenzen F₁ und F₂ durch die Regelung entgegengewirkt wird. Auf diese Weise wird eine zumindest über einen längeren Beobachtungszeitraum im Wesentlichen gleichbleibende Lissajous-Figur ermöglicht. Über die Mittelung der gemessenen Ist-Phasenlagen *φ*₁ und *φ*₂ werden zudem beide Schwingungsachsen bei der Regelung gleich gewichtet.

Anstelle des Reglers kann auch eine Frequenzsteuerung ("open-loop") vorgesehen sein, die dann beide Frequenzen jeweils proportional verstellt, so dass auch hier das Frequenzverhältnis FR wieder stabil bleibt bzw. einer Veränderung desselben durch die proportionale Steuerung entgegengewirkt wird.

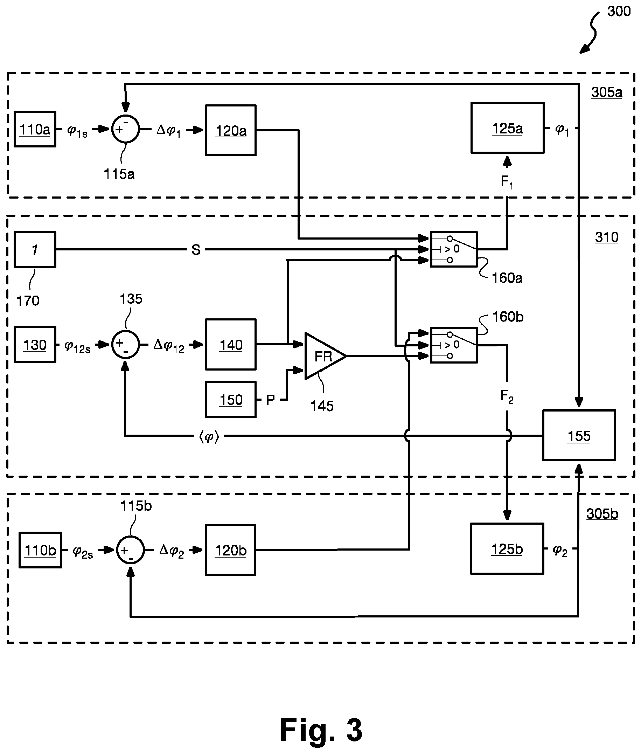

Bei dem in **Fig. 3** dargestellten Ausführungsbeispiel 300 einer Steuerungsvorrichtung gemäß der beanspruchten Erfindung sind die Phasenregelungen aus den Figuren 1 und 2 kombiniert, um ein Umschalten zwischen zwei verschiedenen Verfahrensmodi bzw. Betriebsmodi der Steuerungsvorrichtung zu ermöglichen. Im Rahmen der folgenden Beschreibung des ersten Ausführungsbeispiels 300 wird auch auf das dadurch ausführbare Verfahren zur Steuerung eines Antriebs für ein mehrachsiges Mikroscannersystem eingegangen.

Die Steuerungsvorrichtung 300 weist daher eine erste PLL 305a für die erste Schwingungsachse, eine zweite PLL 305b für die zweite Schwingungsachse, sowie eine kombinierte PLL 310 als Schaltungsbestandteile auf. Die kombinierte PLL 310 erhält als Führungsgröße einen Soll-Wert *φ*₁₂ₛ für den Mittelwert der Phasenlagen beider Schwingungsachsen. Um das Umschalten zwischen den beiden Verfahrensmodi beziehungsweise Betriebsmodi zu ermöglichen, sind zwei Schalter 160a und 160b vorgesehen, die jeweils über ein von einem Signalgeber 170 generiertes Schaltsignal S steuerbar sind. Hier ist beispielhaft gezeigt, dass ein Umschalten der Schalter 160a und 160b dann erfolgt, wenn das Signal s einen Signalwert größer "0", im digitalen (binären) Fall also einen Wert "1", aufweist.

In einer ersten Schalterstellung (wie in Fig. 3 eingezeichnet) sind die beiden PLLs 305a und 305b sowie die beiden Regelstrecken 125a und 125b von der kombinierten PLL 310 entkoppelt. Diese Schalterstellung entspricht einem ersten Verfahrensmodus beziehungsweise Betriebsmodus der Steuerungsvorrichtung, der demjenigen aus Fig. 1 entspricht, wo die beiden Antriebsfrequenzen F₁ und F₂ unabhängig voneinander jeweils von ihrer zugehörigen PLL 305a bzw. 305b geregelt werden. Dieser erste Modus kann insbesondere zum Aufschwingen des Mikroscannersystems bei seinem Hochfahren oder bei einem Wiederhochfahren nach einer Störung verwendet werden, da es hier weniger um eine hohe Bildqualität, sondern vielmehr um ein schnelles und effizientes Durchführen der Einschwingvorgänge der Oszillationen geht.

Die durch Umschalten erreichbare andere, zweite Schalterstellung entspricht einem zweiten Verfahrensmodus bzw. Betriebsmodus der Steuerungsvorrichtung, der demjenigen aus Fig. 2 entspricht, wo die kombinierte PLL 310 zum Einsatz kommt. In diesem Modus findet, wie zuvor unter Bezugnahme auf Fig. 2 bereits im Einzelnen erläutert wurde, eine Regelung dahingehend statt, dass dabei ein stabiles Frequenzverhältnis FR zwischen den beiden Antriebsfrequenzen F1 und F2 eingestellt und jeder der Regelstrecken 125a und bzw. 125b die aus dieser Regelung resultierende jeweilige zugeordnete Antriebsfrequenz F₁ bzw. F₂ als Stellgröße zugeführt wird, insbesondere in Form eines diese jeweilige Antriebsfrequenz F₁ bzw. F₂ aufweisenden Antriebssignals für die jeweilige Antriebseinrichtung (z.B. Piezoaktuator(en)).

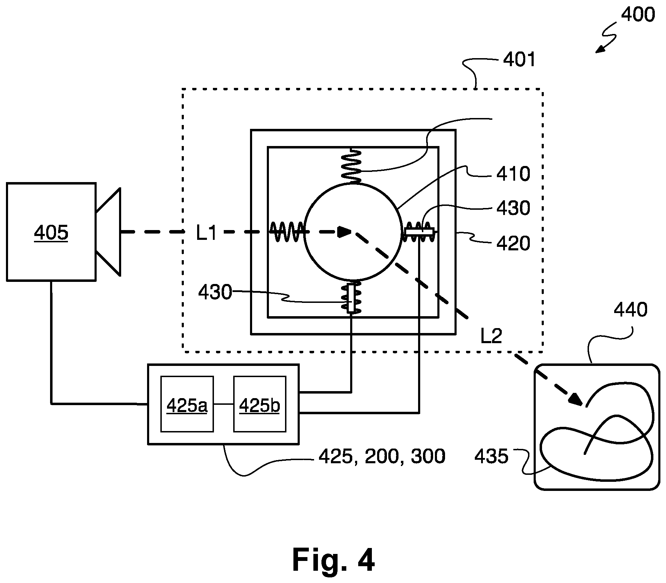

**Fig. 4** zeigt schematisch ein zweiachsiges Mikroscannersystem gemäß einer beispielhaften Ausführungsform 400 der vorliegenden Lösung, das insbesondere zur Projektion von Bildern oder Bildfolgen (z.B. bewegten Bildern, Videos usw.) genutzt werden kann. Das Mikroscannersystem 400 weist eine Strahlungsquelle 405 auf, die insbesondere eine Laserquelle sein kann, wobei die Wellenlänge der emittierten Strahlung L₁ insbesondere im sichtbaren Spektralbereich liegen kann, wenngleich anwendungsabhängig auch andere Spektralbereiche genutzt werden können, etwa im Rahmen von Verfahren zur Materialinspektion. Im Folgenden wird, soweit nichts anderes gesagt ist, beispielhaft davon ausgegangen, dass die Strahlung L₁ als Laserstrahl im sichtbaren Spektralbereich emittiert wird.

Der Laserstrahl L₁ ist auf einen Mikroscanner 401 gerichtet, der ein über zwei gekreuzte Federpaare 415, die jeweils eine Schwingungsachse definieren, an einem umlaufenden Rahmen 420 aufgehängtes Ablenkelement 410 in Form einer Spiegelplatte aufweist. Am Ablenkelement 410 wird der Strahl L₁ im Sinne einer optischen Abbildung reflektiert (gespiegelt) und als reflektierter Strahl L₂ auf eine Projektionsfläche 440 im Beobachtungsfeld des Mikroscanners 401 gerichtet.

Das Mikroscannersystem 400 weist des Weiteren eine Steuerungsvorrichtung 425 auf, die eingerichtet ist, die Strahlungsquelle mit zumindest einem Modulationssignal zu versorgen, in Abhängigkeit von dem der Laserstrahl moduliert wird. Die Modulation kann insbesondere seinen zeitlichen oder örtlichen Intensitätsverlauf betreffen. Je nach Typ der Strahlungsquelle sind jedoch auch andere Modulationsarten denkbar, insbesondere Modulationen der Wellenlänge (z.B. Farbe) oder Wellenlängenverteilung der von der Strahlungsquelle 405 emittierten Strahlung. Bei der Projektion von Bildern, erfolgt die Modulation entsprechend in Abhängigkeit von der momentanen Ablenkrichtung, so dass entsprechende Bildpunkte auf der Projektionsfläche mit dem zugehörigen Pixelwert des korrespondierenden Bildpunkts des darzustellenden Bildes per Modulation erzeugt werden.

Die Steuerungsvorrichtung 425 ist des Weiteren eingerichtet, eine Antriebseinrichtung des Mikroscanners 401 anzusteuern, um diese, gemäß dem lösungsgemäßen Verfahren zum Antrieb von simultanen Oszillationen des Ablenkelements 410 des Mikroscanners 401 um dessen beide Schwingungsachsen zu veranlassen, so dass der durch den reflektierte Strahl L₂ auf der Projektionsfläche 440 erzeugte Licht- bzw. Strahlungspunkt eine Trajektorie bzw. Bahn in Form einer trajektoriengeregelten Lissajous-Figur 435 durchläuft, die bereits innerhalb eines kurzen Betrachtungszeitraums einen als Bildfläche vorgesehenen Bereich auf der Projektionsfläche vollständig ausleuchtet. Im Falle einer Projektion eines digitalen Bilds, welches aus Pixeln aufgebaut ist, bedeutet dies, dass in dem Betrachtungszeitraums sämtliche Pixel durch die Trajektorie erreicht bzw. dargestellt werden. Die Antriebseinrichtung kann insbesondere zumindest einen Aktuator, insbesondere Piezoaktuator 430 aufweisen. In Fig. 4 sind beispielhaft gemäß einer denkbaren Ausführungsform zwei auf je einer der Federn 415 je Federpaar angebrachte Piezoaktuatoren 430 dargestellt. Auch auf den beiden anderen Federn 415 kann jeweils ein weiterer solcher Piezoaktuator 430 vorgesehen sein.

Die Steuerungsvorrichtung 425 weist je Schwingungsachse eine Phasenregelung zur Stabilisierung eines Frequenzverhältnisses zwischen den Antriebsfrequenzen F₁ und F₂ der beiden Schwingungsachse auf. Die Steuerungsvorrichtung kann insbesondere der Ausführungsform 200 aus Fig. 2 oder der Ausführungsform 300 aus Fig. 3 entsprechen oder eine solche aufweisen.

Anstelle einer derartigen hardware-basierten Implementierung ist jedoch auch eine software-basierte Implementierung möglich (wie in Fig. 4 dargestellt). Dazu kann die Steuerungsvorrichtung 425 insbesondere eine Datenverarbeitungseinrichtung 425a mit einem oder mehreren Prozessoren sowie eine Speichereinrichtung 425b aufweisen. In der Speichereinrichtung 425b kann insbesondere ein Computerprogramm abgelegt sein, das konfiguriert ist, bei seinem Ablaufen auf der Datenverarbeitungseinrichtung bzw. deren zumindest einen Prozessor, die Steuervorrichtung 425 zu veranlassen, das Verfahren auszuführen. Insbesondere kann die kombinierte Regelung der beiden Antriebsfrequenzen F₁ und F₂ ganz oder teilweise auf diese Form softwareimplementiert sein. Zudem kann die Speichereinrichtung dazu dienen, die aktuelle Einstellung der Parametrisierung P vorzuhalten (vgl. Fig. 2 oder 3).

Das Mikroscannersystem 400 kann jedoch auch in Gegenrichtung betreibbar sein, so dass von einem zu beobachtenden Objekt emittierte oder reflektierte Strahlung mittels einer Lissajous-Figur abgetastet und dabei am entsprechend oszillierenden Ablenkelement 410 gespiegelt und in Richtung der Einheit 405 abgebildet wird, wo sich dann zusätzlich oder anstelle einer Laserquelle eine Sensoreinrichtung, insbesondere ein Bildsensor, befinden kann, um die Strahlung sensorisch zu erfassen.

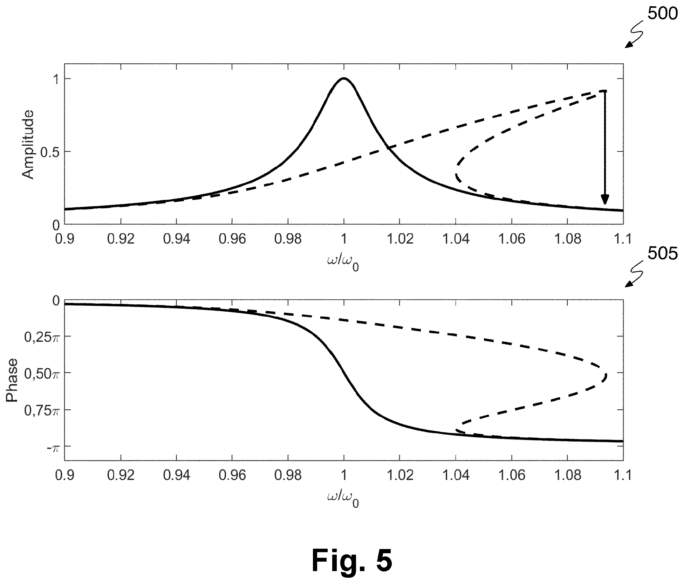

**Fig. 5** zeigt in jeweiligen Diagrammen 500 bzw. 505 einen beispielhaften Amplitudengang und Phasengang (gestrichelt gezeichnete Kurven) eines nichtlinearen Oszillators, insbesondere eines sogenannten Duffing-Oszillators (bei dem anstelle der gemäß dem Hook'schen Gesetz linear von der Auslenkung abhängigen Rückstellkraft eine kubische Rückstellkraft vorliegt), jeweils als Funktion der auf die Resonanzkreisfrequenz *ω*₀ des Oszillators bezogenen Antriebskreisfrequenz *ω*/*ω*₀, im Vergleich zu korrespondierenden Amplituden- und Phasengang (durchgezogen gezeichnete Kurven) bei einem harmonischen Oszillator. Ein solcher Amplituden- und Phasengang kann insbesondere bezüglich einer Schwingung eines Ablenkelements um eine Schwingungsachse eines Mikroscanners auftreten, bezüglich der das Ablenkelement mit seiner Aufhängung einen derartigen nichtlinearen Oszillator bildet. Bezogen auf die o.g. Beispiele mit den Antriebsfrequenzen F₁ und F₂ gilt je nach betrachteter Schwingungsachse *ω*=2*π*·F₁ bzw. *ω*=2*π*·F₂.

Beispiele für nichtlineare Oszillatoren bei Mikroscannern finden sich insbesondere in DE 10 2020 116 511. Dazu gehören insbesondere zweidimensionale Mikroscanner mit gekoppelten Schwingungsachsen, als Mikroscanner, bei denen eine nichtvernachlässigbare Wechselwirkung zwischen den Schwingungen bezüglich zweier orthogonal zueinander stehenden Schwingungsachsen des Ablenkelements des Mikroscanners auftritt.

Während der im Diagramm 500 illustrierte Amplitudengang des zum Vergleich dargestellten harmonischen Oszillators bei seiner Resonanzkreisfrequenz *ω*₀ bzw. gleichbedeutend bei *ω*/*ω*₀ *=* 1 ein relativ scharf ausgeprägtes Maximum aufweist, ergibt sich beim nichtlinearen Oszillator in Abhängigkeit der Koeffizienten der nichtlinearen Terme der korrespondierenden Schwingungsgleichung ein weniger steil verlaufender Überhang, im vorliegenden Falle zu höheren Frequenzen hin, so dass im Bereich des Überhangs die Amplitudenwerte davon abhängen, ob man sich von kleineren oder größeren Frequenzen her dem Überhangbereich nähert. Es kommt also zur Hysterese. Insgesamt ergibt sich ein asymmetrisch zu Resonanzkreisfrequenz *ω*₀ liegendes Maximum, das breiter ist als beim harmonischen Oszillator, bei dem der zugehörige Frequenzbereich mit den höchsten Amplitudenwerten (z.B. oberhalb von 90% des Maximalwerts) enger ausfällt und symmetrisch um das Maximum bei der Resonanzkreisfrequenz *ω*₀ liegt.

Wie aus dem unteren Diagramm in Fig. 5 entnehmbar ist, tritt beim nicht-linearen Oszillator auch eine Abflachung und Verschiebung des Phasenübergangs zu Phasen mit entgegengesetztem Vorzeichen erst bei höheren Antriebskreisfrequenzen *ω* (mit *ω*/*ω*₀ *>* 1) auf als beim harmonischen Oszillator. Der Wert der Phase am Umkehrpunkt der (gestrichelten) Phasenverlaufskurve beträgt dabei stets *π*/2.

Ein solcher nichtlinearer Oszillator, insbesondere in Form eines Ablenkelements eines Mikroscanners, ist somit in einem um *ω*/*ω*₀ *=* 1 liegenden und somit insbesondere bei resonant betriebenen Mikroscannern genutzten Frequenzbereich bezüglich seiner Amplitude und Phase robuster gegenüber kleinen (insbesondere temperarturabhängigen) Schwankungen oder -verschiebungen des Verhältnisses *ω*/*ω*₀, sei es durch eine entsprechende Änderung der Resonanzkreisfrequenz *ω*₀ und/oder der Antriebskreisfrequenz *ω*, als ein ansonsten vergleichbarer harmonischer Oszillator.

Allerdings ist es hier im Hinblick auf das Vermeiden von Amplitudensprüngen in der Oszillation sinnvoll, eine Begrenzung der Frequenz des nichtlinearen Oszillators dahingehend zu implementieren, dass das Verhältnis *ω*/*ω*₀ den Sprungpunkt am Ende des Überhangs nicht erreicht, wo eine Unstetigkeit (Sprung) im Kurvenverlauf auftritt (siehe Pfeil). Dies kann insbesondere über eine entsprechende Begrenzung bzw. Festlegung der Antriebskreisfrequenz *ω*/*ω*₀ erreicht werden, wobei deren typischer Schwankungsbereich im Rahmen einer jeweiligen Implementierung berücksichtigt wird bzw. werden sollte.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand abgewichen wird.

### BEZUGSZEICHENLISTE

- 100: herkömmliche Steuerungsvorrichtung zum Antrieb eines zweiachsigen Mikroscannersystems
- 105a: individueller Phasenregelkreis (PLL) für die erste Schwingungsachse
- 105b: individueller Phasenregelkreis (PLL) für die zweite Schwingungsachse
- 110a: Quelle einer Führungsgröße für die PLL 105a
- 110b: Quelle einer Führungsgröße für die PLL 105b
- 115a: Differenzglied der PLL 105a
- 115b: Differenzglied der PLL 105b
- 120a: Regler der PLL 105a
- 120b: Regler der PLL 105b
- 125a: Regelstrecke für die erste Schwingungsachse
- 125b: Regelstrecke für die zweite Schwingungsachse
- 130: Quelle einer Führungsgröße für die PLL 205
- 135: Differenzglied der PLL 205
- 140: Regler der PLL 205
- 145: Frequenzwandler
- 150: Konfigurationseinrichtung
- 155: Mittelwertberechnungsglied
- 160a, b: Schalter
- 200: erste Ausführungsform einer Steuerungsvorrichtung
- 205: kombinierte PLL der ersten Ausführungsform 200
- 300: zweite Ausführungsform einer Steuerungsvorrichtung
- 305a: individueller Phasenregelkreis (PLL) für die erste Schwingungsachse
- 305b: individueller Phasenregelkreis (PLL) für die zweite Schwingungsachse
- 310: kombinierter Phasenregelkreis (PLL) für beide Schwingungsachsen
- 400: Mikroscannersystem
- 401: zweiachsiger Mikroscanner
- 405: Strahlungsquelle
- 410: Ablenkelement
- 415: Federpaare
- 420: Rahmen
- 425: Steuerungsvorrichtung
- 425a: Datenverarbeitungseinrichtung
- 425b: Speichereinrichtung
- 430: Piezoaktuator
- 435: Lissajous-Figur bzw. Lissajous-Trajektorie
- 440: Projektionsfläche
- 500: Diagramm zu frequenzabhängigen Amplitudengängen
- 505: Diagramm zu frequenzabhängigen Phasengängen
- F₁: Antriebsfrequenz für die erste Schwingungsachse
- F₂: Antriebsfrequenz für die zweite Schwingungsachse
- FR: Frequenzverhältnis der Antriebsfrequenzen beider Schwingungsachsen
- P: Parametrisierung zur Einstellung des Frequenzverhältnisses FR
- *φ*₁ₛ: Führungsgröße (Soll-Phasenlage) für die erste Schwingungsachse
- *φ*₂ₛ: Führungsgröße (Soll-Phasenlage) für die zweite Schwingungsachse
- Δ*φ*₁: Regelabweichung für die erste Schwingungsachse
- Δ*φ*₂: Regelabweichung für die zweite Schwingungsachse
- *φ*₁: Ist-Phasenlage für die erste Schwingungsachse
- *φ*₂: Ist-Phasenlage für die zweite Schwingungsachse
- *φ*₁₂ₛ: Führungsgröße (Soll-Phasenlage) für den Mittelwert der Phasenlagen beider Schwingungsachsen
- 〈*φ*〉: Mittelwert der Ist-Phasenlagen *φ*₁ und *φ*₂
- L₁: einfallender (Laser)strahl
- L₂: reflektierter (Laser)strahl
- *ω*: Antriebskreisfrequenz
- *ω*₀: Resonanzkreisfrequenz

## Patentansprüche

1. Verfahren zur Steuerung eines Antriebs (430) für ein mehrachsiges Mikroscannersystem (400), wobei das Verfahren aufweist:
Ansteuern einer Antriebseinrichtung (430) für das Mikroscannersystem (400) derart, dass das Mikroscannersystem (400) dadurch veranlasst wird, eine erste rotatorische Oszillation eines Ablenkelements (410) des Mikroscannersystems (400) um eine erste Schwingungsachse mittels einer Anregung mit einer ersten Antriebsfrequenz (F₁) und simultan zur ersten Oszillation eine zweite rotatorische Oszillation eines Ablenkelements (410) des Mikroscannersystems (400) um eine zur ersten Schwingungsachse nicht-parallele zweite Schwingungsachse mittels einer Anregung mit einer zweiten Antriebsfrequenz (F₂) anzutreiben, wobei diese Antriebsfrequenzen (F_{1,} F₂) jeweils zeitlich variiert werden;
wobei das Verfahren ferner aufweist:
einen ersten Verfahrensmodus, bei dem die Ansteuerung der Antriebseinrichtung (430) so erfolgt, dass die erste Oszillation und die zweite Oszillation unabhängig voneinander mittels je einem individuellen Phasenregelkreis (305a; 300b) individuell geregelt werden; und
einen zweiten Verfahrensmodus, bei dem die Ansteuerung der Antriebseinrichtung (430) derart erfolgt, dass das zeitliche Variieren der Antriebsfrequenzen (F₁, F₂) mittels eines beiden Oszillationen gemeinsamen Phasenregelkreises zum Regeln der Phasen beider Oszillationen so erfolgt, dass zugleich anhand der Regelung einer Veränderung des Frequenzverhältnisses zwischen den beiden Antriebsfrequenzen (F₁, F₂) entgegengewirkt wird,
wobei im Rahmen des Verfahrens mittels einer Schalteinrichtung (160a, 160b) ein Umschalten zwischen den beiden Verfahrensmodi erfolgt.

2. Verfahren nach Anspruch 1, wobei das Frequenzverhältnis eine mittels zumindest einer Parametrisierung der Steuerung einstellbare Größe ist, und das Verfahren des Weiteren ein Einstellen dieser Größe auf einen Sollwert umfasst.

3. Verfahren nach Anspruch 2, wobei das Einstellen dieser Größe auf einen Sollwert erfolgt, während die Oszillationen durch die Antriebseinrichtung (430) angetrieben werden.

4. Verfahren nach einem der vorausgehenden Ansprüche, wobei das Entgegenwirken gegen eine Veränderung des Frequenzverhältnisses zwischen den beiden Antriebsfrequenzen, zumindest in einem eingeschwungenen Zustand der beiden Oszillationen, derart erfolgt, dass dabei das Frequenzverhältnis in einem Bereich von ± 1% insbesondere in einem Bereich von ± 0,01%, bevorzugt in einem Bereich von ± 0,001%, seines Ausgangswerts zu Beginn des zeitlichen Variierens der Antriebsfrequenzen (F₁, F₂) gehalten wird.

5. Verfahren nach einem der vorausgehenden Ansprüche, wobei für die Regelung im zweiten Verfahrensmodus eine Regelgröße verwendet wird, die
sowohl von einem ersten sensorisch erfassten Wert zumindest einer physikalischen Größe abhängt, die in einem Abhängigkeitsverhältnis mit einer Resonanzfrequenz der ersten Schwingungsachse steht,
als auch von einem zweiten sensorisch erfassten Wert zumindest einer zweiten physikalischen Größe abhängt, die in einem Abhängigkeitsverhältnis mit einer Resonanzfrequenz der zweiten Schwingungsachse steht.

6. Verfahren nach Anspruch 5, wobei die erste physikalische Größe und/oder die zweite physikalische Größe einen der folgenden Zustände des Mikroscannersystems (400) oder eine Kombination von zumindest zwei dieser Zustände oder Zustandsveränderungen charakterisiert oder davon abhängt:
- eine Verschiebung einer gemessenen Resonanzfrequenz zumindest einer der Oszillationen;
- eine Temperatur;
- eine mechanische Spannung oder Dehnung;
- eine Schwingungsamplitude des bzw. eines Ablenkelements (410);
- eine bei zumindest einer der Oszillationen auftretende Phaseninstabilität;
- eine jeweilige Stellgröße eines Phasenregelkreises für die Phase zumindest einer der Oszillationen;
- eine Phasendifferenz (Δ*φ*_{1;} Δ*φ*₂) zwischen einem Antriebssignal zur Ansteuerung der Antriebseinrichtung (430) und einem Messsignal (*φ*₁; *φ*₂), das eine gemessene Auslenkung des Ablenkelements (410) repräsentiert;
- eine Veränderung der eingestrahlten elektromagnetischen Strahlungsleistung, die das Ablenkelement (410) durch Absorption aufnimmt;
- eine Veränderung eines Schwingungszustands eines Referenzoszillators im Mikroscannersystem (400), der mit einem Schwingungszustand des bzw. zumindest eines Ablenkelements (410) korreliert ist.

7. Verfahren nach Anspruch 5 oder 6, wobei die Regelgröße anhand einer Mittelwertbildung oder einer Schlechtpunktregelung aus der ersten physikalischen Größe und der zweiten physikalische Größe als Eingangsgrößen bestimmt wird, wobei die Schlechtpunktregelung eine Regelung ist, bei der die für das Erreichen eines guten Führungsverhaltens der Regelung kritischere der beiden physikalischen Größe als Führungsgröße dient.

8. Verfahren nach einem der vorausgehenden Ansprüche, wobei zum Aufschwingen der Oszillationen aus einem Ruhezustand oder wenn ein Auftreten einer Störung zumindest einer der Oszillationen detektiert wurde, der erste Verfahrensmodus eingesetzt wird und das Umschalten vom ersten Verfahrensmodus in den zweiten Verfahrensmodus erfolgt, wenn nachfolgend detektiert wird, dass sich die beiden Oszillationen in einem jeweiligen eingeschwungenen Zustand befinden.

9. Verfahren nach einem der vorausgehenden Ansprüche, wobei das Ablenkelement (410) des Mikroscannersystems bezüglich zumindest einer seiner Schwingungsachsen einen nicht-linearen Oszillator bildet, und das zeitliche Variieren der Antriebsfrequenzen (F_{1,} F₂) so erfolgt, dass das Frequenzverhältnis in einem bestimmten Frequenzverhältnisbereich gehalten wird, wobei der Frequenzbereich der jeweiligen Antriebsfrequenzen (F₁, F₂) unterhalb einer Frequenz des jeweiligen nicht-linearen Oszillators liegt, bei der er bei ansteigender Antriebsfrequenz eine maximale Amplitude erreicht.

10. Steuerungsvorrichtung (300, 425) zum Steuern eines Antriebs für ein mehrachsiges Mikroscannersystem (400), wobei die Steuerungsvorrichtung (300, 425) konfiguriert ist, das Verfahren nach einem der vorausgehenden Ansprüche auszuführen;
wobei die Steuerungsvorrichtung konfiguriert ist, die Phasen beider Oszillationen gemäß dem Verfahren nach einem der vorausgehenden Ansprüche zu regeln und des Weiteren aufweist:
einen beiden Oszillationen gemeinsamen Phasenregelkreis zum Regeln der Phasen beider Oszillationen, wobei das Ansteuern der Antriebseinrichtung (430) ein Regeln der Oszillationen umfasst, wobei das zeitliche Variieren der Antriebsfrequenzen (F_{1,} F₂) so erfolgt, dass zugleich anhand der Regelung einer Veränderung des Frequenzverhältnisses zwischen den beiden Antriebsfrequenzen (F₁, F₂) entgegengewirkt wird;
je einen individuellen Phasenregelkreis (305a; 300b) zur jeweils individuellen Regelung der beiden Oszillationen; und
eine Schalteinrichtung (160a,160b) zum Umschalten zwischen den Verfahrensmodi;
wobei die Steuerungsvorrichtung des Weiteren konfiguriert ist, zum Regeln der Phasen beider Oszillationen im ersten Verfahrensmodus für jede Oszillation den ihr jeweils zugeordneten individuellen Phasenregelkreis (305a; 300b) und im zweiten Verfahrensmodus den gemeinsamen Phasenregelkreis (310) einzusetzen.

11. Mikroscannersystem (400) mit zumindest einem Ablenkelement (410) das eine erste rotatorische Oszillation um eine erste Schwingungsachse ausführen kann und mit zumindest einem Ablenkelement (410) das simultan zur ersten Oszillation eine zweite rotatorische Oszillation um eine zur ersten Schwingungsachse nicht-parallele zweite Schwingungsachse ausführen kann, um durch reflektierendes Ablenken eines während der simultanen Oszillationen auf das Mikroscannersystem (400) einfallenden elektromagnetischen Strahls (L₁) eine Lissajous-Projektion in ein Beobachtungsfeld zu bewirken;
eine Antriebseinrichtung (430) zum Antrieb der simultanen Oszillationen; und eine Steuerungsvorrichtung (300, 425) nach Anspruch 10 zur Ansteuerung der Antriebseinrichtung (430).

12. Mikroscannersystem (400) nach Anspruch 11, wobei das Ablenkelement (410) bezüglich zumindest einer seiner Schwingungsachsen einen nicht-linearen Oszillator bildet.

13. Mikroscannersystem (400) nach Anspruch 12, wobei die Steuerungsvorrichtung (300, 425) konfiguriert ist, die Antriebseinrichtung (430) zumindest zum Antrieb des nicht-linearen Oszillators gemäß dem Verfahren nach Anspruch 9 anzusteuern.

14. Computerprogramm oder Computerprogrammprodukt mit Anweisungen, die bei ihrer Ausführung auf zumindest einem Prozessor (425a) der Steuerungsvorrichtung (425) nach Anspruch 10 diese veranlassen, das Verfahren nach einem der Ansprüche 1 bis 9 zur Steuerung eines Antriebs für ein mehrachsiges Mikroscannersystem (400), insbesondere ein Mikroscannersystem (400) nach einem der Ansprüche 11 bis 13, auszuführen.

## Claims

1. Method for controlling a drive (430) for a multi-axis micro-scanner system (400), the method comprising:
controlling a drive device (430) for the micro-scanner system (400) such that
the micro-scanner system (400) is caused to drive a first rotational oscillation of a deflection element (410) of the micro-scanner system (400) about a first oscillation axis by means of excitation at a first drive frequency (F₁) and, simultaneously with the first oscillation, a second rotational oscillation of a deflection element (410) of the micro-scanner system (400) about a second oscillation axis which is not parallel to the first oscillation axis, by means of excitation at a second drive frequency (F₂), wherein these drive frequencies (F₁, F₂) are each varied in time;
wherein the method further comprises:
a first method mode in which the drive device (430) is controlled such that the first oscillation and the second oscillation are controlled independently of one another by means of an individual phase-locked loop (305a; 300b) assigned to each oscillation; and
a second method mode in which the drive device (430) is controlled such that the temporal variation of the drive frequencies (F₁, F₂) by means of a phase-locked loop common to both oscillations for regulating the phases of both oscillations in such a way that a change in the frequency ratio between the two drive frequencies (F₁, F₂) is simultaneously counteracted,
Wherein, as a part of the method, a switching device (160a,160b) is used to switch between the two method modes.

2. Method according to claim 1, wherein the frequency ratio is a variable that can be set by means of at least one parameterization of the control, and the method further comprises setting this variable to a target value.

3. Method according to claim 2, wherein the setting of this variable to a target value occurs while the oscillations are driven by the drive device (430).

4. Method according to any one of the preceding claims, wherein the counteraction against a change in the frequency ratio between the two drive frequencies, at least in a steady state of the two oscillations, is carried out in such a way that the frequency ratio is kept in a range of ± 1%, in particular in a range of ± 0.01%, and preferably in a range of ± 0.001%, of its initial value at the beginning of the temporal variation of the drive frequencies (F₁, F₂).

5. Method according to one of the preceding claims, wherein for regulation in the second method mode a regulation variable is used which
depends both on a first sensor-detected value of at least one physical variable which is in a dependency relationship with a resonance frequency of the first oscillation axis,
and on a second sensor-detected value of at least one second physical variable which is in a dependency relationship with a resonance frequency of the second oscillation axis.

6. Method according to claim 5, wherein the first physical variable and/or the second physical variable characterizes or depends on one of the following states of the micro-scanner system (400) or a combination of at least two of these states or state changes:
- a shift of a measured resonance frequency of at least one of the oscillations;
- a temperature;
- a mechanical stress or strain;
- an oscillation amplitude of the or a deflection element (410);
- a phase instability occurring in at least one of the oscillations;
- a respective control variable of a phase-locked loop for the phase of at least one of the oscillations;
- a phase difference (Δ*φ*₁; Δ*φ*₂) between a drive signal for controlling the drive device (430) and a measurement signal (*φ*₁; *φ*₂), which represents a measured deflection of the deflection element (410);
- a change in the incident electromagnetic radiation power which the deflection element (410) receives by absorption;
- a change in an oscillation state of a reference oscillator in the micro-scanner system (400), which is correlated with an oscillation state of the or at least one deflection element (410).

7. Method according to claim 5 or 6, wherein the regulation variable is determined by means of an averaging or a bad point regulation from the first physical variable and the second physical variable as input variables, wherein the bad point regulation is a regulation in which the more critical of the two physical variables for achieving good reference behavior of the regulation serves as the reference variable.

8. Method according to one of the preceding claims, wherein the first method mode is used to start the oscillations from a resting state or when an occurrence of a disturbance of at least one of the oscillations has been detected, and the switching from the first method mode to the second method mode takes place when it is subsequently detected that the two oscillations are in a respective steady state.

9. Method according to any one of the preceding claims, wherein the deflection element (410) of the micro-scanner system forms a non-linear oscillator with respect to at least one of its oscillation axes, and the temporal variation of the drive frequencies (F₁, F₂) occurs such that the frequency ratio is kept within a certain frequency ratio range, wherein the frequency range of the respective drive frequencies (F_{1,} F₂) is below a frequency of the respective non-linear oscillator at which it reaches a maximum amplitude with increasing drive frequency.

10. Control device (300, 425) for controlling a drive for a multi-axis micro-scanner system (400), wherein the control device (300, 425) is configured to carry out the method according to any one of the preceding claims;
wherein the control device is configured to regulate the phases of both oscillations according to the method of any one of the preceding claims and further comprises:
a phase-locked loop common to both oscillations for regulating the phases of both oscillations, wherein the control of the drive device (430) comprises a controlling of the oscillations, wherein the temporal variation of the drive frequencies (F₁, F₂) is carried out in such a way that a change in the frequency ratio between the two drive frequencies (F₁, F₂) is simultaneously counteracted;
a respective individual phase-locked loop (305a; 300b) for respectively individually controlling the two oscillations; and
a switching device (160a,160b) for switching between the method modes;
wherein the control device is further configured to regulate the phases of both oscillations and to use the individual phase-locked loop (305a; 300b) assigned to each oscillation in the first method mode for regulating the phases of both oscillations and to use the common phase-locked loop (310) in the second method mode.

11. Micro-scanner system (400) with at least one deflection element (410), which can carry out a first rotational oscillation around a first oscillation axis and with at least one deflection element (410) which can carry out a second rotational oscillation around a second oscillation axis which is not parallel to the first oscillation axis, simultaneously with the first oscillation, in order to cause a Lissajous projection in an observation field by reflective deflection of an electromagnetic beam (L₁) incident on the micro-scanner system (400) during the simultaneous oscillations;
a drive device (430) for driving the simultaneous oscillations; and
a control device (300, 425) according to claim 10 for controlling the drive device (430).

12. Micro-scanner system (400) according to claim 11, wherein the deflection element (410) forms a non-linear oscillator with respect to at least one of its oscillation axes.

13. Micro-scanner system (400) according to claim 12, wherein the control device (300, 425) is configured to control the drive device (430) at least for driving the non-linear oscillator according to the method according to claim 9.

14. Computer program or computer program product with instructions which, when executed on at least one processor (425a) of the control device (425) according to claim 10, cause the control device to carry out the method according to any one of claims 1 to 9 for controlling a drive for a multi-axis micro-scanner system (400), in particular a micro-scanner system (400) according to any one of claims 11 to 13.

## Revendications

1. Procédé de commande d'un entraînement (430) pour un système de micro-scanner à plusieurs axes (400), dans lequel le procédé comprenant:
la commande d'un dispositif d'entraînement (430) pour le système de micro-scanner (400) de telle sorte que le système de micro-scanner (400) est amené à entraîner une première oscillation rotative d'un élément de déviation (410) du système de micro-scanner (400) autour d'un premier axe d'oscillation au moyen d'une excitation à une première fréquence d'entraînement (F₁) et simultanément à la première oscillation une deuxième oscillation rotative d'un élément de déviation (410) du système de micro-scanner (400) autour d'un deuxième axe d'oscillation non parallèle au premier axe d'oscillation au moyen d'une excitation à une deuxième fréquence d'entraînement (F₂), dans lequel ces fréquences d'entraînement (F_{1,} F₂) sont chacune variées dans le temps;
dans lequel le procédé comprend en outre:
un premier mode de procédé dans lequel la commande du dispositif d'entraînement (430) est effectuée de telle sorte que la première oscillation et la deuxième oscillation sont régulées individuellement indépendamment l'une de l'autre au moyen d'une boucle de régulation de phase individuelle (305a; 300b); et
un deuxième mode de procédé dans lequel la commande du dispositif d'entraînement (430) est effectuée de telle sorte que la variation dans le temps des fréquences d'entraînement (F_{1,} F₂) est effectuée au moyen d'une boucle de régulation de phase commune aux deux oscillations pour réguler les phases des deux oscillations de telle sorte qu'une modification du rapport de fréquence entre les deux fréquences d'entraînement (F_{1,} F₂) est en même temps contrecarrée à l'aide de la régulation,
dans lequel, dans le cadre du procédé, une commutation entre les deux modes de procédé est effectuée au moyen d'un dispositif de commutation (160a, 160b).

2. Procédé selon la revendication 1, dans lequel le rapport de fréquence est une grandeur réglable au moyen d'au moins un paramétrage de la commande, et le procédé comprend en outre un réglage de cette grandeur à une valeur de consigne.

3. Procédé selon la revendication 2, dans lequel le réglage de cette grandeur à une valeur de consigne est effectué pendant que les oscillations sont entraînées par le dispositif d'entraînement (430).

4. Procédé selon l'une quelconque des revendications précédentes, dans lequel la lutte contre une modification du rapport de fréquence entre les deux fréquences d'entraînement, au moins dans un état stabilisé des deux oscillations, est effectuée de telle sorte que le rapport de fréquence est maintenu dans une plage de ± 1 %, en particulier dans une plage de ± 0,01 %, de préférence dans une plage de ± 0,001 %, de sa valeur initiale au début de la variation dans le temps des fréquences d'entraînement (F₁, F₂).

5. Procédé selon l'une quelconque des revendications précédentes, dans lequel une grandeur de régulation est utilisée pour la régulation dans le deuxième mode de procédé, qui
dépend à la fois d'une première valeur détectée par capteur d'au moins une grandeur physique qui est dans un rapport de dépendance avec une fréquence de résonance du premier axe d'oscillation,
et d'une deuxième valeur détectée par capteur d'au moins une deuxième grandeur physique qui est dans un rapport de dépendance avec une fréquence de résonance du deuxième axe d'oscillation.

6. Procédé selon la revendication 5, dans lequel la première grandeur physique et/ou la deuxième grandeur physique caractérise ou dépend de l'un des états suivants du système de micro-scanner (400) ou d'une combinaison d'au moins deux de ces états ou changements d'état:
- un décalage d'une fréquence de résonance mesurée d'au moins une des oscillations;
- une température;
- une contrainte ou une déformation mécanique;
- une amplitude d'oscillation du ou d'un élément de déviation (410);
- une instabilité de phase se produisant lors d'au moins une des oscillations;
- une grandeur de réglage respective d'une boucle de régulation de phase pour la phase d'au moins une des oscillations;
- une différence de phase (Δφ₁; Δ*φ*₂) entre un signal d'entraînement pour commander le dispositif d'entraînement (430) et un signal de mesure (φ_{1;} *φ*₂) qui représente une déviation mesurée de l'élément de déviation (410);
- une modification de la puissance de rayonnement électromagnétique irradiée que l'élément de déviation (410) absorbe par absorption;
- une modification d'un état d'oscillation d'un oscillateur de référence dans le système de micro-scanner (400), qui est corrélé à un état d'oscillation du ou d'au moins un élément de déviation (410).

7. Procédé selon la revendication 5 ou 6, dans lequel la grandeur de régulation est déterminée à l'aide d'une formation de valeur moyenne ou d'une régulation de mauvais point à partir de la première grandeur physique et de la deuxième grandeur physique en tant que grandeurs d'entrée, dans lequel la régulation de mauvais point est une régulation dans laquelle la plus critique des deux grandeurs physiques pour atteindre un bon comportement de guidage de la régulation sert de grandeur de guidage.

8. Procédé selon l'une quelconque des revendications précédentes, dans lequel, pour faire osciller les oscillations à partir d'un état de repos ou lorsqu'une apparition d'une perturbation d'au moins une des oscillations a été détectée, le premier mode de procédé est utilisé et la commutation du premier mode de procédé au deuxième mode de procédé est effectuée lorsqu'il est ensuite détecté que les deux oscillations se trouvent dans un état stabilisé respectif.

9. Procédé selon l'une quelconque des revendications précédentes, dans lequel l'élément de déviation (410) du système de micro-scanner forme un oscillateur non linéaire par rapport à au moins un de ses axes d'oscillation, et la variation dans le temps des fréquences d'entraînement (F₁, F₂) est effectuée de telle sorte que le rapport de fréquence est maintenu dans une plage de rapport de fréquence déterminée, dans lequel la plage de fréquence des fréquences d'entraînement respectives (F₁, F₂) est inférieure à une fréquence de l'oscillateur non linéaire respectif à laquelle elle atteint une amplitude maximale lorsque la fréquence d'entraînement augmente.

10. Dispositif de commande (300, 425) pour commander un entraînement pour un système de micro-scanner à plusieurs axes (400), dans lequel le dispositif de commande (300, 425) est configuré pour exécuter le procédé selon l'une quelconque des revendications précédentes;
dans lequel le dispositif de commande est configuré pour réguler les phases des deux oscillations selon le procédé selon l'une quelconque des revendications précédentes et comprend en outre:
une boucle de régulation de phase commune aux deux oscillations pour réguler les phases des deux oscillations, dans lequel la commande du dispositif d'entraînement (430) comprend une régulation des oscillations, dans lequel la variation dans le temps des fréquences d'entraînement (F_{1,} F₂) est effectuée de telle sorte qu'une modification du rapport de fréquence entre les deux fréquences d'entraînement (F_{1,} F₂) est en même temps contrecarrée à l'aide de la régulation;
une boucle de régulation de phase individuelle (305a; 300b) pour la régulation individuelle respective des deux oscillations; et
un dispositif de commutation (160a, 160b) pour commuter entre les modes de procédé;
dans lequel le dispositif de commande est en outre configuré pour utiliser, pour la régulation des phases des deux oscillations dans le premier mode de procédé, pour chaque oscillation, la boucle de régulation de phase individuelle (305a; 300b) qui lui est respectivement associée et, dans le deuxième mode de procédé, la boucle de régulation de phase commune (310).

11. Système de micro-scanner (400) avec au moins un élément de déviation (410) qui peut effectuer une première oscillation rotative autour d'un premier axe d'oscillation et avec au moins un élément de déviation (410) qui peut effectuer, simultanément à la première oscillation, une deuxième oscillation rotative autour d'un deuxième axe d'oscillation non parallèle au premier axe d'oscillation, afin de provoquer une projection de Lissajous dans un champ d'observation par déviation réfléchissante d'un faisceau électromagnétique (L₁) incident sur le système de micro-scanner (400) pendant les oscillations simultanées;
un dispositif d'entraînement (430) pour entraîner les oscillations simultanées; et un dispositif de commande (300, 425) selon la revendication 10 pour commander le dispositif d'entraînement (430).

12. Système de micro-scanner (400) selon la revendication 11, dans lequel l'élément de déviation (410) forme un oscillateur non linéaire par rapport à au moins un de ses axes d'oscillation.

13. Système de micro-scanner (400) selon la revendication 12, dans lequel le dispositif de commande (300, 425) est configuré pour commander le dispositif d'entraînement (430) au moins pour entraîner l'oscillateur non linéaire selon le procédé selon la revendication 9.

14. Programme informatique ou produit de programme informatique comprenant des instructions qui, lorsqu'elles sont exécutées sur au moins un processeur (425a) du dispositif de commande (425) selon la revendication 10, amènent celui-ci à exécuter le procédé selon l'une quelconque des revendications 1 à 9 pour commander un entraînement pour un système de micro-scanner à plusieurs axes (400), en particulier un système de micro-scanner (400) selon l'une quelconque des revendications 11 à 13.
